# EUROPÄISCHE PATENTANMELDUNG

(11) **EP 1 749 802 A1**
(43) Veröffentlichungstag der Anmeldung: **07.02.2007**
(21) Anmeldenummer: 06015137.0
(22) Anmeldetag: 20.07.2006
(51) Int. Cl.: C03B 37/07

(54) **Verfahren und Vorrichtung zur Überwachung einer Glasfaserproduktion**

(30) Priorität: 28.07.2005 DE 102005035946
(71) Anmelder: UAS Messtechnik GmbH, 94234 Viechtach (DE)
(72) Erfinder: Donaubauer, Bernd, 94227 Zwiesel (DE); Donaubauer, Thomas, 94227 Zwiesel (DE)
(74) Vertreter: Benninger, Johannes

(57) **Zusammenfassung**

Die Erfindung betrifft eine Vorrichtung zur Überwachung einer Glasfaserproduktion, umfassend mindestens eine Einrichtung zur Herstellung wenigstens einer Glasfaser aus einer Glasschmelze, bei der die wenigstens eine Glasfaser durch Schwerkraft und/oder mit Druckunterstützung aus der Schmelze gefördert wird und dabei erkaltet und erstarrt. Die Erfindung betrifft weiterhin ein Verfahren zur Überwachung einer Glasfaserproduktion, bei dem wenigstens eine Glasfaser aus einer Glasschmelze erzeugt wird, wobei die wenigstens eine Glasfaser durch Schwerkraft und/oder mit Druckunterstützung aus der Schmelze gefördert wird und dabei erkaltet und erstarrt.

Das Verfahren und die Vorrichtung sind gekennzeichnet durch eine berührungslose Erfassung einer von der wenigstens einen aus der Schmelze (16) ausgetretenen und bei ihrer Förderung erstarrenden Glasfaser emittierten elektromagnetischen Strahlung.

## Beschreibung

Die Erfindung betrifft eine Vorrichtung zur Überwachung einer Glasfaserproduktion sowie ein entsprechendes Verfahren, insbesondere zur optischen Überwachung von Produktionsparametern bei der Glasfaserproduktion.

Die Produktion von Glasseide für technische Anwendungen ist ein bedeutender Wirtschaftsfaktor geworden. Prozessstörungen bei der Glasfaser- bzw. Glasseideherstellung führen zu erheblichen finanziellen Verlusten. Eine Betriebsstörung von mehr als einem Tag kann zum Erstarren des Glases in allen Bearbeitungsprozessen und damit nahezu zum Totalverlust einer Produktionskette führen. Wünschenswert ist eine permanente Überwachung aller kritischen Punkte der Fertigung, bspw. mit geeigneter Sensorik, Prozesserkennung und Prozessteuerung.

Zur Herstellung größerer Fadenbündel wird geschmolzenes Glas in eine Düsenwanne geleitet und durch geeignete Druckbeaufschlagung durch die Düsen gedrückt und zu Fäden verarbeitet, die kurz nach dem Austreten aus den Düsen erstarren und zu Bündeln auf einer Rolle aufgewickelt werden können. Ein Riss einzelner Fäden kann aufgrund der Tendenz, damit auch benachbarte Fäden zu beeinträchtigen, zu einem Abriss der Produktionskette und damit zum Teilausfall bei der Herstellung führen.

Bisher werden derartige Parameter nur manuell überwacht bzw. nach erfolgtem Riss erkannt. Nach Erkennung eines gerissenen Fadens sind oftmals schon längere Abschnitte schadhafter Glasfaserbündel aufgewickelt. Diese müssen entweder abgewickelt werden, um die beeinträchtigte Stelle zu finden, oder das gesamte Bündel wird als Material minderer Qualität ausgesondert und anderweitig weiterverarbeitet oder verteilt.

Ein vorrangiges Ziel der vorliegenden Erfindung besteht darin, ein Verfahren sowie eine Vorrichtung zur Verfügung zu stellen, die eine verbesserte Qualitätskontrolle und -einhaltung ermöglichen.

Dieses Ziel der Erfindung wird mit dem Gegenstand der unabhängigen Ansprüche erreicht. Merkmale vorteilhafter Weiterbildungen der Erfindung ergeben sich aus den jeweiligen abhängigen Ansprüchen.

Eine Vorrichtung zur Überwachung einer Glasfaserproduktion gemäß unabhängigem Anspruch 1 umfasst mindestens eine Einrichtung zur Herstellung wenigstens einer Glasfaser aus einer Glasschmelze, bei der die wenigstens eine Glasfaser durch Schwerkraft und/oder mit Druckunterstützung aus der Schmelze gefördert wird und dabei erkaltet und erstarrt. Erfindungsgemäß umfasst die Vorrichtung zudem eine Einrichtung zur berührungslosen Erfassung einer von der wenigstens einen aus der Schmelze ausgetretenen und bei ihrer Förderung erstarrenden Glasfaser emittierten elektromagnetischen Strahlung. Es wird dabei die Tatsache ausgenutzt, dass ein sich abzeichnender Riss einer Glasfaser normalerweise mit einer erhöhten Strahlungsintensität an der Rissstelle einher geht. Eine gerissener Faser führt dazu, dass aus der betreffenden Düse das geschmolzene Glas nicht mehr fadenartig austritt und weggefördert wird. Es bildet sich vielmehr aufgrund der Oberflächenspannung des erkaltenden Glases ein noch flüssiger Tropfen, der einen Punkt mehr oder weniger stark erhöhter Helligkeit bzw. Strahlungsintensität bildet. Diese erhöhte Strahlungsintensität wird bei der erfindungsgemäßen Vorrichtung erfasst und kann zur Überwachung der Produktionsparameter genutzt werden.

Die Einrichtung zur berührungslosen Erfassung der elektromagnetischen Strahlung kann insbesondere eine optische Erfassungseinrichtung bzw. ein optischer Sensor sein. Als Erfassungseinrichtung für die elektromagnetische Strahlung kommt insbesondere eine Kamera in Frage. Dies kann eine Digitalkamera zur Erfassung eines Punktmusters sein. Mit den Pixelmustern, welche eine solche Kamera liefert, können dann weitere Prozessfolgen gesteuert werden, bspw. eine Abschaltung der Produktion oder eine Speicherung der Schadensparameter, um später die schadhafte Wicklung sowie auf dieser die schadhafte Stelle mittels einer eindeutigen Datenzuordnung leicht und automatisiert auffinden zu können.

Eine bevorzugte Ausführungsform der Glasfaserproduktionsanlage sieht vor, dass der Glasschmelze wenigstens eine nach unten gerichtete Düse zur Herstellung einer Glasfaser zugeordnet ist. Die Düse kann insbesondere Teil einer Düsenwanne mit einer Vielzahl von zumindest teilweise regelmäßig angeordneten Einzeldüsen sein. Hierbei ist der Glasfaseraustritt nach unten gerichtet, so dass die optische Erfassungseinrichtung bzw. die Kamera nach oben zur Unterseite der Düsenwanne hin gerichtet ist.

Zusätzlich kann zwischen optischer Erfassungseinrichtung und Kamera wenigstens eine optische Filterschicht angeordnet sein. Diese optische Filterschicht weist vorzugsweise eine für einen definierten Wellenlängenbereich der elektromagnetischen Strahlung erhöhte Durchlässigkeit auf, so dass nur der relevante Wellenlängenbereich erfasst wird. Auf diese Weise kann die Kamera die notwendigen Parameter durch Erfassung einfacher Hell-Dunkel-Unterschiede liefern.

Wahlweise können auch mehrere Kameras unterhalb der Düsenwanne angeordnet sein.

Der Kamera oder den Kameras können gemäß einer bevorzugten Ausführungsform der Erfindung eine Reinigungs- bzw. Reinhaltevorrichtung zugeordnet sein. Diese kann bspw. durch eine gezielte Luftströmung dafür sorgen, dass die Kameraoptik frei von Ablagerungen und Verunreinigungen bleibt. Derartige Beeinträchtigungen können insbesondere auch von einem Sprühnebel aus Wassertröpfchen herrühren, der oftmals auf die aus der Düse bzw. der Düsenwanne austretenden Glasfasern aufgesprüht wird, damit diese schneller abkühlen.

Die Erfindung betrifft weiterhin ein Verfahren zur Überwachung einer Glasfaserproduktion, bei dem wenigstens eine Glasfaser aus einer Glasschmelze erzeugt wird, wobei die wenigstens eine Glasfaser durch Schwerkraft und/oder mit Druckunterstützung aus der Schmelze gefördert wird und dabei erkaltet und erstarrt. Das Verfahren ist gekennzeichnet durch eine berührungslose Erfassung einer von der wenigstens einen aus der Schmelze ausgetretenen und bei ihrer Förderung erstarrenden Glasfaser emittierten elektromagnetischen Strahlung. Das erfindungsgemäße Verfahren wird vorzugsweise mittels einer erfindungsgemäßen Vorrichtung gemäß einer der zuvor beschriebenen Ausführungsformen durchgeführt, so dass für die verschiedenen Ausführungsformen und Varianten des Verfahrens im Wesentlichen die gleichen Aspekte und Vorteile gelten.

Zusammenfassend ergeben sich u.a. folgende Aspekte der Erfindung. Das erfindungsgemäße Verfahren bzw. die erfindungsgemäße Vorrichtung sehen bei einer Glasseidenproduktion eine optische Überwachung der Fadenverläufe mittels einer Kamera vor, der vorzugsweise ein Farbfilter vorgeschaltet ist, um Helligkeitsunterschiede, die insbesondere beim Fadenabriss entstehen, erkennbar zu machen. Die erhöhte Helligkeit beim gerissenen Faden kann als Punkt abweichender Helligkeit im Kamerabild erfasst und weiterverarbeitet werden.

Ein Fadenriss spielt sich in der Regel über einen längeren Zeitraum von ca. einer bis zwei bis hin zu mehreren Minuten ab. Zunächst bildet sich oben an der Düsenwanne an einer Spinndüse ein Tropfen. Dieser wächst dann mit der Zeit an und schlägt auf weitere Filamente über. Der Tropfen fällt dann, wenn er zu groß und schwer ist, nach unten und führt zu einem Totalabriss des Fadens. Das Bedienpersonal, das bis zu 20 Spinnstellen zu überwachen und nach einem Riss wieder einzurichten hat, kann den Riss meist erst erkennen, wenn die nach unten fallenden Glastropfen unterhalb der Kühlklemme sichtbar sind. Außerdem ist es für die Arbeitskraft oftmals sehr schwierig, einen Riss zu erkennen, wenn es sich nur um einen Abriss von nur wenigen Filamenten handelt.

Ansatz für die vorliegende Erfindung ist es, einen Riss bereits frühzeitig in seiner Entstehung, anhand bestimmter Anzeichen erkennen zu können. Dazu wird die Düsenwanne von einer oder auch mehreren Kameras, die mit einem speziellen Filtersystem ausgerüstet sind, beobachtet. Die Bilder werden mittels einer Bildverarbeitungssoftware ausgewertet und es können bereits minimale Veränderungen erkannt werden. Wird ein Riss erkannt, so wird ein Signal erzeugt, das beliebig weiter verarbeitet werden kann und über das weitere Schritte gesteuert werden können. Die Produktion von Ausschussware wird somit erheblich verringert.

Zur Bilderfassung werden je nach Gegebenheit und Anforderung entweder eine oder auch mehrere Industriekameras eingesetzt. Diese müssen auflösungstechnisch so beschaffen sein, dass die komplette Fläche beobachtet werden kann und dabei die einzelnen Spinndüsen genügend gut dargestellt sind. Die Anbringung der Kameras muss in jedem Fall eine Beobachtung der gesamten Düsenwanne gewährleisten und darf sich nicht störend auf den Arbeitsprozess auswirken. Deshalb muss anwendungsspezifisch möglichst flexibel zwischen in Frage kommenden Anbringungsmöglichkeiten gewählt werden können.

Die Kamera kann ggf. mit einem speziellen Filtersystem, das exakt auf das thermische Emissionsspektrum der Düsenwanne abgestimmt ist, ausgestaltet sein.

Zur Erkennung von Fadenrissen werden mit Hilfe einer kommerziellen Bildverarbeitungssoftware die Bilder schnell ausgewertet. Dabei werden unter anderen z.B. die Kontrolle und das Vergleichen verschiedener Grauwertstufen sowie das Suchen nach signifikanten Mustern zur Analyse herangezogen.

Für die Anbringung der Kamera gibt es z.B. folgende Möglichkeiten: Erstens die Anbringung mittels einer Schiene im forderen, oberen Bereich. Dazu wird die Kamera höhen- und winkelverstellbar an einer Schiene befestigt. Diese Halterungsschiene wird dann in eine zweite Schiene geschoben. Das Kabel und die Kühlluftversorgung werden so weggeführt, dass sie nicht stören. Dieses System ist sowohl für eine als auch für mehrere Kameras realisierbar. Diese Art der Halterung bietet sich vor allem für bereits bestehende Anlagen an, da so gut wie nichts an der Anlage verändert werden muss. Das Personal wird durch die Art der Anbringung der Kamera nicht in seiner Tätigkeit gestört.

Eine weitere Anbringungsmöglichkeit ist die an der Rückwand der Spinnstelle. Sie bietet sich vor allem für neu gebaute Anlagen an, wo schon in der Planungsphase Platz für den Einbau des Systems geschaffen werden kann. Bei bereits bestehenden Anlagen kann der Rückraum stark verbaut und somit kein Platz für die Anbringung des Kameragehäuses mehr sein. Vorteile dieser Variante sind, dass die Kamera viel besser vor negativen äußeren Einflüssen wie hohen Temperaturen oder Verschmutzung geschützt ist. Ein weiterer Vorteil ist die bequeme Art der Anbringung sowie der unter Umständen besser Erfassungswinkel der Kamera. Dieser ist aufgrund der tiefer gelegenen Installationsstelle günstiger.

Eine dritte Integrationsmöglichkeit besteht darin, die Kamera auf einer Art Stativ zu positionieren. Vorteil dieser Variante ist die größere Flexibilität. Ein Nachteil ist, dass das Personal unter Umständen in seiner Tätigkeit gestört ist.

Da in der Einsatzumgebung sehr hohe Temperaturen herrschen und eine starke Verschmutzung der Linse durch Spritzwasser nicht ausgeschlossen werden kann, muss die Kamera durch ein eigens entwickeltes Gehäuse geschützt werden. Dieses ist so aufgebaut, dass von hinten Kühlluft in das Gehäuse geblasen wird, welche die Kamera kühlt. An der Vorderseite des Schutzgehäuses kann die Luft durch entsprechende Öffnungen wieder austreten. Die austretenden Luftmassen sind so gerichtet, dass die Linse gleichzeitig vor allzu großer Verschmutzung gesichert ist und der Sprühnebel von der Kamera ferngehalten wird. Der Luftstrom darf aber auch nicht zu stark sein, da ansonsten der Prozess der Glasfaserherstellung beeinträchtigt werden kann.

Die erfindungsgemäße Vorrichtung sowie das erfindungsgemäße Verfahren eignet sich grundsätzlich zum universellen Einsatz bei jeder denkbaren Art der Glasfaser- und Glasseidenproduktion, ungeachtet, ob die Glasfasern bspw. später zur Datenübertragung verwendet werden oder ob sie bspw. als Matrixgewebe für Verbundbauteile (z.B. GFK - glasfaserverstärkter Kunststoff) eingesetzt werden.

Die Erfindung wird nachfolgend anhand bevorzugter Ausführungsbeispiele unter Bezugnahme auf die beiliegenden Zeichnungen näher erläutert.
Fig. 1 zeigt eine schematische Darstellung eines Aufbaus zur optischen Überwachung der Glasfadenproduktion.
Fig. 2 zeigt in schematischen Darstellungen mehrere Möglichkeiten der Kameraanbringung bei dem Qualitätsüberwachungssystem gemäß Fig. 1.
Fig. 3 zeigt eine Seitenansicht einer Ausführungsvariante einer Kamera.
Fig. 4 zeigt eine Frontansicht der Kamera gemäß Fig. 3.

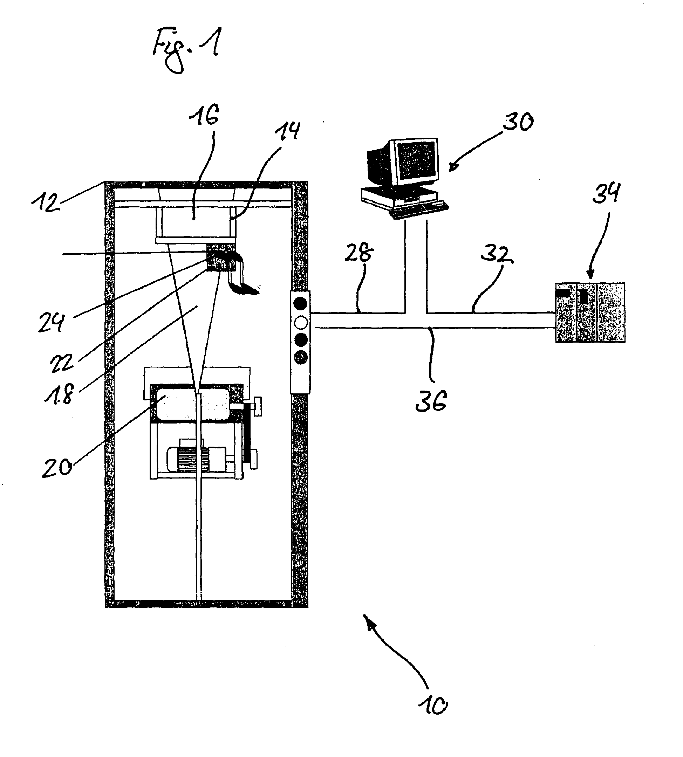

Die schematische Darstellung der Fig. 1 zeigt eine erfindungsgemäße Vorrichtung 10 zur Glasfaserproduktion. Ein sog. Spinnstand 12 umfasst eine Düsenwanne 14 mit darin befindlicher Glasschmelze 16. Die nach unten aus den Düsen der Düsenwanne 14 austretenden Glasfaserbündel bzw. Glasfaserfilamente 18 kühlen dabei ab werden nach unten abgeführt und auf einer Schlichterolle 20 aufgewickelt.

Der gezogene Faden wird im feuchten Zustand mit extrem hoher Geschwindigkeit auf eine Spule aufgewickelt. Die Spulen werden im weiteren Prozess getrocknet und zu verkaufsfähigen Produkten weiterverarbeitet bzw. umgewickelt.

Die Produktion von Glasseidefäden läuft folgendermaßen ab: An den einzelnen Spinnstellen fließen aus unterschiedlich großen (vom Tex-Wert, der Maßeinheit bei Glasseidefäden, des Endprodukts abhängig) Düsenwannen mit unterschiedlich vielen Spinndüsen, dünne zähflüssige Glasfäden (Filamente). Diese werden dann mit einer Schlichte besprüht, die die spätere Elastizität des Glasseidefadens sichert. Nachdem die Filamente mit der Schlichte benetzt wurden, laufen die Filamente über eine Rolle (auf die sie vom Bediener vor Anlauf des Spinnvorgangs gezogen werden), von der sie zu einem Bündel zusammengefasst werden. Das Bündel gelangt dann in die eigentliche Spinnstelle, von der aus der Faden auf Manschetten aufgespult wird.

Ein Fadenriss spielt sich in der Regel über einen längeren Zeitraum (bis zu mehreren Minuten) ab. Zunächst bildet sich oben an der Düsenwanne an einer Spinndüse ein Tropfen. Dieser wächst dann mit der Zeit an und schlägt auf weitere Filamente über. Der Tropfen fällt dann wenn er zu groß und schwer ist nach unten und führt zu einem Totalabriss des Fadens.

In der Glasseideproduktion kommt es zu enormen Ausschussproduktionen, da bisher kein System zur frühzeitigen Erkennung von Fadenrissen auf dem Markt verfügbar ist.

Das Bedienpersonal, dass bis zu 20 Spinnstellen zu überwachen und nach einem Riss wieder einzurichten hat, kann den Riss meist erst erkennen, wenn die nach unten fallenden Glastropfen unterhalb der Kühlkämme sichtbar sind. Außerdem ist es für die Arbeitskraft äußerst schwierig, einen Riss zu erkennen, wenn es sich nur um einen Abriss von nur wenigen Filamenten handelt. Die große Menge an Spinnstellen, die eine Arbeitskraft zu überwachen und zu bearbeiten hat, führt neben den teilweise mit bloßem Auge schwierig zu erkennenden Teilabrissen zu relativ langen Erkennungszeiten. Da die Spulmaschinen den Faden mit Geschwindigkeiten von bis zu 2300 m/min (ca. 38m/s) ziehen, gelangt sehr viel Faden, der nicht mehr den Normanforderungen entspricht, auf eine Rolle. Da auch nicht mehr nachvollzogen werden kann, wie lange der Faden bis hin zur Erkennung, oder zum Komplettabriss schon teilweise gerissen war, befindet sich eine nicht abschätzbare Menge Ausschussmaterial auf den Spulen, die somit Ausschuss sind.

Ansatz für das erfindungsgemäße System ist daher, einen Riss bereits frühzeitig in seiner Entstehung, anhand bestimmter Anzeichen, erkennen zu können. Dazu wird die Düsenwanne von einer oder auch mehreren Industriekameras, die mit einem speziellen Filtersystem ausgerüstet sind, beobachtet. Die Bilder werden mittels einer Bildverarbeitungssoftware ausgewertet und es können bereits minimale Veränderungen erkannt werden. Wird ein Riss erkannt, so wird ein Signal generiert, das beliebig weiter verarbeitet werden kann und über das weitere Schritte gesteuert werden können. Die Produktion von Ausschussware wird somit erheblich verringert. Berücksichtigt man dann auch noch den sich durch die Zeitersparnis (aufgrund der viel frühzeitigeren Erkennung) ergebenden Vorteil, so wird daraus unmittelbar deutlich, das eine erhebliche Effizienzsteigerung der Glasseideproduktionsanlage erreicht werden kann.

Der Bereich unterhalb der Düsenwanne 14 wird mittels wenigstens einer Kamera 22 optisch erfasst. Die Kamera 22 liefert ein elektrisches Signal, das Pixelinformationen sowie Daten über deren Helligkeitsunterschiede enthält. Angedeutet sind weiterhin Leitungsverbindungen 24 für eine Stromversorgung und das Videosignal sowie eine Kühlluftversorgung 26 für die Kamera, die gleichzeitig zur Reinhaltung des Objektivs vor Verunreinigungen und Sprühnebel sorgt.

Nicht dargestellt ist eine optische Filterschicht, die zwischen Düsenwanne 14 und Kamera 22 angeordnet ist und die für eine Abschwächung von Wellenlängenbereichen der optisch erfassten Strahlung sorgen kann, die für die Auswertung nicht von Interesse sind. Der Filter sorgt dafür, dass die Kamera 22 ein relativ schmalbandiges Signal erhält, was zu einer verbesserten Qualität und Zuverlässigkeit des Fehlersignals führt.

Die Kamera 22 liefert permanent ein Videosignal 28, das mittels einer Rechnereinheit 30 visualisiert und oder über den Produktionszeitraum gespeichert werden kann. Die Rechnereinheit 30 kann bspw. Teil einer Fertigungssteuerung und/oder - überwachung oder auch Teil einer sog. Messwarte sein. Ein von der Rechnereinheit 30 geliefertes Steuersignal 32 kann weiterhin zur Steuerung einer teil- oder vollautomatischen Fertigungssteuerung 34 eingesetzt werden. Diese Fertigungssteuerung 34 kann nahezu jede beliebige Steuerungsanlage (z.B. SPS-Steuerung) zur Gewährleistung einer teil- oder vollautomatischen Glasfaserproduktion sowie einer Weiterverarbeitung der Glasfasern sein.

Alternativ oder zusätzlich kann die Kamera 22 auch so programmiert sein, dass sie ein Stoppsignal 36 liefert, das unmittelbar eine Reaktion in der Fertigungssteuerung 34 auslöst, bspw. einen Produktionsstopp oder eine Trennung der Filamentbahn auf der Schlichterolle o. dgl.

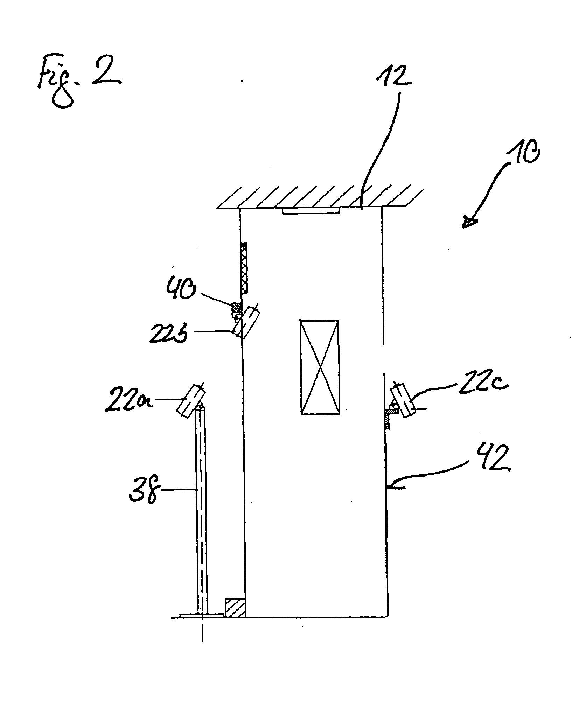

Die schematische Darstellung der Fig. 2 verdeutlicht verschiedene alternative Kamerapositionen bei der erfindungsgemäßen Vorrichtung 10. Gleiche Teile wie in Fig. 1 sind mit gleichen Bezugziffern bezeichnet. Die linke Kamera 22a steht auf einem Stativ 38, das separat vom Spinnstand 12 auf dem Boden aufgestellt werden kann. Diese Variante eignet sich besonders gut zur einfachen und kostengünstigen Nachrüstung vorhandener Systeme, ohne dass an diesen bauliche Veränderungen notwendig sind. Allerdings kann die Kameraposition unter Umständen für das Bedienpersonal störend sein bzw. die Zugänglichkeit des Spinnstandes 12 beeinträchtigen.

Die mittlere Kamera 22b ist an einer Schiene 40 in einer höheren Einbauposition angebracht. Vorzugsweise ist diese Halterung höhen- und/oder winkelverstellbar. Dieses System kann sowohl für eine als auch für mehrere Kameras sinnvoll sein. Diese Art der Kameramontage bietet sich ebenfalls für bereits bestehende Anlagen an, da hier keine nennenswerten baulichen Veränderungen notwendig sind. Das Bedienpersonal wird durch die Art der Anbringung der Kamera 22b nicht in seiner Tätigkeit gestört.

Die in Fig. 2 rechte Kamera 22c ist an einer Rückwand 42 der Spinnstelle 12 angeordnet. Diese Anbringung bietet sich insbesondere für neu konzipierte Anlagen an, bei der die Kameraposition bereits bei der Planung berücksichtigt werden kann. Bei bereits bestehenden Anlagen kann der Rückraum stark verbaut und somit kein Platz für die Anbringung des Kameragehäuses mehr sein. Ein Vorteil dieser dritten Variante ist, dass die Kamera 22c sehr gut vor negativen äußeren Einflüssen wie hohen Temperaturen oder Verschmutzung geschützt ist. Die Kamera 22c ist dennoch gut zugänglich und liefert einen günstigen Betrachtungswinkel auf die Düsenwanne 14.

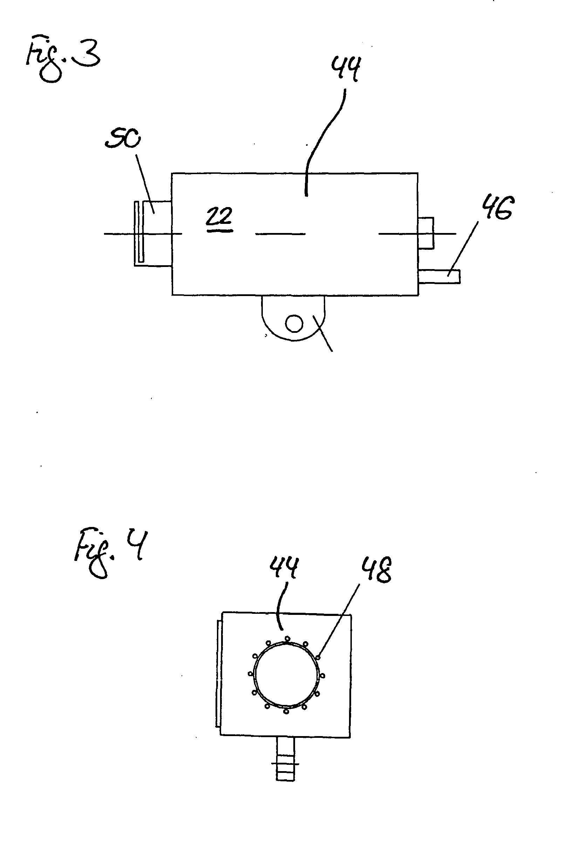

Die Figuren 3 und 4 zeigen eine Seitenansicht (Fig. 3) und eine Frontansicht (Fig. 4) einer bevorzugten Variante einer Kamera 22. Vorzugsweise weisen die Kameras 22 jeweils ein spezielles Gehäuse 44 auf, das einen Schutz vor Verschmutzung und Spritzwasser bietet. Das Gehäuse 44 ist so aufgebaut, dass von hinten Kühlluft 46 in das Gehäuse 44 geblasen wird, welche die Kamera 22 kühlt. An der Vorderseite des Schutzgehäuses 44 kann die Luft durch entsprechende Öffnungen 48 wieder austreten. Die austretenden Luftmassen sind so gerichtet, dass die Linse 50 gleichzeitig von allzu großer Verschmutzung gesichert ist und der Sprühnebel von der Kamera 22 ferngehalten wird. Der Luftstrom darf aber auch nicht zu stark sein, da sonst der Prozess der Filamentproduktion beeinträchtigt werden kann.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

## Patentansprüche

1. Vorrichtung zur Überwachung einer Glasfaserproduktion, umfassend mindestens eine Einrichtung zur Herstellung wenigstens einer Glasfaser aus einer Glasschmelze, bei der die wenigstens eine Glasfaser durch Schwerkraft und/oder mit Druckunterstützung aus der Schmelze gefördert wird und dabei erkaltet und erstarrt, **gekennzeichnet durch** eine Einrichtung zur berührungslosen Erfassung einer von der wenigstens einen aus der Schmelze (16) ausgetretenen und bei ihrer Förderung erstarrenden Glasfaser emittierten elektromagnetischen Strahlung.

2. Vorrichtung nach Anspruch 1, **dadurch gekennzeichnet, dass** die Einrichtung zur berührungslosen Erfassung der elektromagnetischen Strahlung eine optische Erfassungseinrichtung bzw. ein optischer Sensor und/oder wenigstens eine Kamera (22) umfasst.

3. Vorrichtung nach Anspruch 1 oder 2, **dadurch gekennzeichnet, dass** der Glasschmelze (16) wenigstens eine nach unten gerichtete Düse zur Herstellung einer Glasfaser zugeordnet ist, wobei die Düse Teil einer Düsenwanne (14) mit einer Vielzahl von zumindest teilweise regelmäßig angeordneten Einzeldüsen ist.

4. Vorrichtung nach einem der voranstehenden Ansprüche, **dadurch gekennzeichnet, dass** der Glasfaseraustritt nach unten gerichtet und dass die optische Erfassungseinrichtung bzw. die Kamera (22) nach oben zur Unterseite der Düsenwanne (14) hin gerichtet ist.

5. Vorrichtung nach einem der voranstehenden Ansprüche, **dadurch gekennzeichnet, dass** zwischen optischer Erfassungseinrichtung bzw. Kamera (22) und Glasschmelze (16) bzw. Düsenwanne (14) wenigstens eine optische Filterschicht mit einer für einen definierten Wellenlängenbereich der elektromagnetischen Strahlung erhöhten Durchlässigkeit angeordnet ist.

6. Verfahren zur Überwachung einer Glasfaserproduktion, bei dem wenigstens eine Glasfaser aus einer Glasschmelze erzeugt wird, wobei die wenigstens eine Glasfaser durch Schwerkraft und/oder mit Druckunterstützung aus der Schmelze gefördert wird und dabei erkaltet und erstarrt, **gekennzeichnet durch** eine berührungslose Erfassung einer von der wenigstens einen aus der Schmelze (16) ausgetretenen und bei ihrer Förderung erstarrenden Glasfaser emittierten elektromagnetischen Strahlung.

7. Verfahren nach Anspruch 6, **dadurch gekennzeichnet, dass** die elektromagnetische Strahlung mittels wenigstens einer Kamera (22), insbesondere mittels einer Digitalkamera zur Erfassung eines Punktmusters erfasst wird.

8. Verfahren nach einem der Ansprüche 6 oder 7, **dadurch gekennzeichnet, dass** der Glasfaseraustritt nach unten gerichtet und dass die optische Erfassungseinrichtung bzw. die Kamera (22) nach oben zur Unterseite der Düsenwanne (14) hin gerichtet ist.

9. Verfahren nach einem der Ansprüche 6 bis 8, **dadurch gekennzeichnet, dass** eine zwischen optischer Erfassungseinrichtung bzw. Kamera (22) und Glasschmelze (16) bzw. Düsenwanne (14) angeordnete optische Filterschicht vorzugsweise elektromagnetische Strahlung eines definierten Wellenlängenbereichs passieren lässt.
